# EUROPEAN PATENT APPLICATION

(11) **EP 0 997 071 A2**
(43) Date of publication of application: **03.05.2000**
(21) Application number: 99121345.5
(22) Date of filing: 26.10.1999
(51) Int. Cl.: A23C 9/12

(54) **Method and plant for hydrolysis of lactose in milk with an enzyme fixed on a support**

(30) Priority: 29.10.1998 IT MI982323
(71) Applicant: AZIENDA MUNICIPALIZZATA CENTRALE DEL LATTE DI MILANO, 20136 Milano (IT)
(72) Inventor: Cerlesi, Pietro, 20097 S.Donato Milanese (Milano) (IT)
(74) Representative: Petruzziello, Aldo

(57) **Abstract**

A method and a plant for hydrolysis of lactose in milk, through contact thereof with a solid enzyme support material.

This solid material consists of spheroidal shaped granules (10) dispersed in the milk introduced into a reactor (6) having a truncated conical shape.

The method and the plant of the invention allow lactose hydrolysis greater than 75% to be obtained with a single pass of the milk in the reactor, whose production capacity is up to fivefold higher than that obtainable with the prior technology.

## Description

The present invention concerns a new method for hydrolysis of lactose in milk, in particular of the type using an enzyme fixed on a support.

The invention also extends to the plant for performing this method, as well as the enzyme support used in said plant.

Milk has a lactose content of about 48 grams/liter, with quite small variations, even between different bovine breeds, between individuals of the same breed and at the different times of lactation. It forms one of the most quantitatively constant macro-constituents of milk.

From the chemical point of view, lactose, of which milk is the only natural source, is a disaccharide consisting of two monomers, glucose and galactose.

The importance of lactose in human nutrition, particularly in infants and the elderly, is due to a number of factors, and in particular:
- it favours retention and assimilation of calcium in the intestine ,
- it enters into the composition of nerve tissue cells (cerebrosides) and glycoproteins;
- it contributes to maintaining an acid environment in the intestine, thus combating proliferation of micro-organisms that can cause intestinal disorders.

Lactose intolerance constitutes one of the most important limitations to milk consumption. This syndrome is caused by a deficiency in beta-galactosidase, an enzyme produced by the epithelial cells of the small intestine that hydrolyzes lactose into the two simple monomers, so that it can be assimilated by the intestinal epithelium.

When lactose is not assimilated, remaining in the intestinal lumen, it tends to increase the osmotic potential, drawing water into the jejunum and forming a substrate for gas-producing coliform flora in the colon. This gives rise to a series of symptoms, such as bloating, diarrhea, etc. Lactose intolerance can be due to genetic causes, related to race, or induced by diseases or intestinal trauma, as well as by prolonged periods without milk consumption.

In order to allow lactose-intolerant individuals to consume milk, without even removing the galactose, methods have been developed for extracting and purifying beta-galactosidase from simple single-cell organisms such as bacteria or especially yeasts.

In direct hydrolysis treatments the enzyme thus obtained, added to milk in suitable amounts and under particular temperature conditions, is capable of hydrolyzing lactose, as occurs in the intestine, thus making it possible for intolerant individuals to consume milk.

Obviously the enzyme, which from a biochemical point of view is a functional protein, remains in the finished product, although in the end, after the heat treatments in use for milk for human consumption (pasteurization - uht), it proves completely inactive (thermal denaturation of proteins).

In the 1980s a particular technology was developed (indirect lactose hydrolysis), according to which the enzyme beta-galactosidase is fixed or immobilized on a suitable solid support material.

According to this hydrolysis treatment, contact between milk and the enzyme is achieved on the support that keeps the enzyme fixed thereon, thus preventing the beta-galactosidase from being released into the milk. The product resulting from the treatment therefore does not contain any foreign elements and differs from "natural" milk only in presence of the two monomers, glucose and galactose.

The known indirect hydrolysis treatments of milk are mainly conditioned by the temperature curves of enzyme activity, the optimal value of which is 36°C, and by the time of contact of the milk with the enzyme. In order to increase the productivity of the system, the latter parameter must obviously have the lowest value possible.

However, the choice of the values to be assigned to the temperature and the enzymatic reaction time is not arbitrary. Operating at the optimum temperature of 36°C in fact means increasing the level of the bacterial load on the support that holds the enzyme and, therefore, also on the hydrolyzed product. To overcome this drawback, the prior art tends to operate at lower than optimal temperatures (8-10°C), with the disadvantage, however, of having to increase the time of contact of the milk with the beta-galactosidase support accordingly. In any case the compromise does not allow an hourly production rate of more than about 1000 litres of milk with hydrolyzed lactose to be achieved.

Neither are better results offered by the known batch treatments, in which a certain amount of milk is recirculated several times on the support bearing the fixed enzyme. In fact this solution, as well as penalizing the quantitative yield of the system, favours an undesirable increase in the bacterial load on the support. In addition, batch treatment by its very nature lacks flexibility, which prevents an immediate response to the different market demands or requirements.

It therefore becomes the main object of the present invention to provide a new method and the relative indirect lactose hydrolysis plant, suitable to provide an end product having the lowest possible bacterial load (qualitatively fit product), though using treatment times compatible with the requirements of industrial mass production.

Another object of the invention is that of making a plant provided with an efficient apparatus for rapid washing of the enzyme support material.

A further object of the invention is that of providing a solid beta-galactosidase support material, having a high specific enzymatic activity toward lactose hydrolysis.

These and other objects are achieved with the lactose hydrolysis method and plant according to the present invention, which have the characteristics indicated in independent claims 1 and 11, respectively. Advantageous embodiments of the invention will be apparent from the dependent claims.

With respect to the known methods, the one according to the present invention offers the advantage of providing the best yields, in both qualitative and quantitative terms, thanks to the possibility of operating in conditions of optimum temperature for lactose hydrolysis, though without an excessive increase in the bacterial load level of the end product. In particular, the method and system of the invention make it possible to achieve more than 75% hydrolysis of lactose with a single pass of the milk in the reactor and with an average hourly production that is five times higher than that which can be obtained with the prior technology.

The invention thus makes it possible to obtain a plant with a high quantitative yield, though without the need to provide for additional operations to reduce the bacterial load in the milk subjected to lactose hydrolysis.

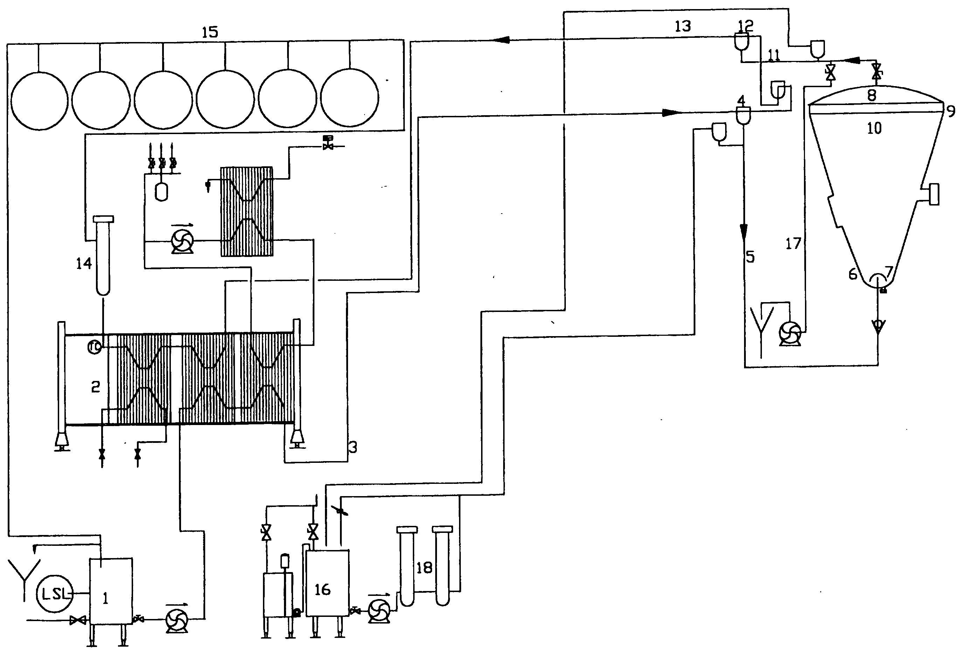

These and other characteristics and advantages will emerge from the description that follows of a preferred embodiment of the plant of the present invention illustrated by way of non-limiting example in the single figure of the appended drawings.

The plant, illustrated diagrammatically in the above mentioned figure, performs lactose hydrolysis in the milk supplied from a tank 1. The milk is conveyed from said tank toward a plate exchanger 2, in which it undergoes heating to a temperature of approximately 36°C. The milk thus heated is then conveyed along a conduit 3 until it reaches a valve 4 that in turn directs it to the conduit 5 supplying a reactor 6.

The latter has a particular truncated conical shape whose lower section 7, having a smaller diameter, forms the inlet for the milk to be treated, whereas the product containing the hydrolyzed lactose leaves from the upper section 8, which has a larger diameter. In addition, at and upstream of the outlet section 8, which has a larger diameter, a filter 9, suitable for retaining the solid part of the content of the reactor 6, is provided. This solid part consists of the material that serves as the support that immobilizes the beta-galactosidase enzyme.

Said material preferably consists of a polymeric resin 10, having a granular structure and spheroidal shape, with a high surface-to-volume ratio. In this manner a high surface of contact between the milk and the support is ensured, which allows the latter to reach the best degree of specific enzymatic activity.

According to the invention, the support material used carries out the covalent fixation of the beta-galactosidase enzyme. It preferably consists of a methacrylamide copolymer, in particular N,N-methylen-bis-acrylamide with a monomer including an oxirane group fixing the enzyme with covalent bond.

The reactor 6, loaded in advance with the granules 10 of the support that carries the fixed beta-galactosidase enzyme, thus receives the supply of milk from the lower section 7 with a smaller diameter. The milk to be treated, on mixing with the solid material 10, forms a sort of suspension that is kept in the reactor 6 for a time of about 2 minutes and at the constant temperature of 36°C. The latter is ensured by heating the sleeve of said reactor, which is preferably provided with a hollow space with a hot water recirculation system (not illustrated).

Conversion of lactose into its basic components, glucose and galactose, is achieved through contact with the granules 10 of the enzyme support material.

The milk thus treated leaves the upper section 8 of the reactor 6, first passing through the filter 9 which, as stated, retains the particles 10 of the solid enzyme support inside the reactor. Subsequently the milk, passing through the conduit 11, the valve 12 and the conduit 13, returns to the exchanger 2, this time through the cooling section thereof. The milk thus cooled enters a subsequent filter 14, which ensures separation of even small traces of particles of the support 10 which may have escaped the previous filter 9 of the reactor 6. The product leaving the filter 14 is finally collected in tanks 15.

The plant just described is further equipped with a unit for washing the granular enzyme supporting material 10. Said unit comprises tanks 16 of a buffered washing solution at pH 7, based on phosphate salts. The solution is then introduced into the reactor 6, after filtering in filters 18, loaded only with the support 10 to be subjected to washing. During this operation, the reactor is filled about 3/4 full with said washing buffer solution.

The system is then subjected to stirring or shaking, so as to achieve complete dispersal of the solid material 10 in the liquid phase formed by the phosphate solution. Lastly, after the time considered necessary for complete washing of the enzyme support material, the solution is discharged from the reactor 6, making it pass through the filter 9 thereof and the outer conduit 17.

The particular structure of the material 10 employed, which offers a high surface-to-volume ratio thanks to its very limited sized and the spheroidal shape of the particles of which it is composed, makes it possible to obtain a very high specific enzymatic activity.

Said characteristic, together with a better control of the temperature of the milk entering the reactor and the geometry of the reactor itself, allows lactose hydrolysis greater than 75% to be achieved with a single pass of the milk in the reactor. The production capacity of the new reactor ranges between 3500 and 5000 litres/hour, thus allowing an average hourly production that is fivefold greater than that which can be achieved with the prior technology.

Obviously it is possible to make changes to the invention as described and illustrated above which, nevertheless, come within the scope of the claims that follow. Thus, for example, results comparable with those of the invention could also be obtained with a reactor of a different shape from that illustrated and described above. Likewise the enzyme support material could be formed of granular bodies of any shape or other similar materials, even if the best results to date have been seen to be obtained with the preferred embodiment described and illustrated.

## Claims

1. A method for hydrolysis of lactose in milk trough contact thereof with a solid support medium bearing fixed thereon beta-galactosidase enzyme, characterized in that said hydrolysis reaction is achieved at a temperature above 12 °C and with a contact time of less than 5 minutes between the milk and said support.

2. A method according to claim 1, characterized in that said solid enzyme support material consists of a granular material.

3. A method according to claims 1 or 2, characterized in that said solid support material carries out the covalent fixation of the beta-galactosidase enzyme.

4. A method according to the preceding claims, characterized in that said support is a methacrylamide copolymer.

5. A method according to the preceding claims, characterized in that said support is N,N-methylen-bis-acrylamide with a monomer including an oxirane group fixing the enzyme with covalent bond.

6. A method according to the preceding claims, characterized in that said contact between said solid enzyme support material and the milk is performed through dispersal of the former in the latter, along a flow path having a widened section in the direction of the latter.

7. A method according to the preceding claims, characterized in that said hydrolysis reaction is achieved at 36°C and through contact of the milk with said support for 2 minutes.

8. A method according to claim 7, characterized in that it provides for hydrolysis of lactose up to amounts greater than 75%, with a single pass of the milk on said support.

9. A method according to claim 8, characterized in that it has a production capacity of 3500-5000 litres/hour of milk with hydrolyzed lactose and with a bacterial load content compatible with dietary use of the treated product.

10. A method according to the preceding claims, characterized in that said granular material consists of spheroidal shaped granules.

11. A method according to the preceding claims, characterized in that it provides for filtering, inside the reactor, of the milk subjected to the hydrolysis treatment, so as to separate it from said solid support material.

12. A method according to one or more of the preceding claims, characterized in that it provides for washing of said solid support material with a buffer solution, said washing being carried out directly inside the reactor, through shaking of said solid material dispersed in said buffer solution and subsequent filtering, so as to remove said solution from the reactor, leaving the washed solid material inside said reactor.

13. A method according to claim 12, characterized in that said buffer solution is a neutral solution based on phosphate salts.

14. A plant for hydrolysis of lactose in milk through contact thereof with a solid support material bearing fixed thereon beta-galactosidase enzyme, of the type comprising a station (2) for heat treatment of milk and at least one hydrolysis reactor (6), characterized in that said reactor possesses a tapered section at the end (7) thereof forming the supply inlet for the milk to be subjected to the hydrolysis process.

15. A plant according to claim 14, characterized in that said reactor (6) has a truncated conical shape, wherein the section with the smaller diameter constitutes the bottom of said reactor.

16. A plant according to claims 14 or 15, characterized in that it has a filter (9) on the section of the reactor (6) with larger dimensions which corresponds to the outlet from said reactor of the milk subjected to the hydrolysis process.

17. A plant according to the preceding claims, characterized in that it further provides for a washing unit for said solid material (10), said unit comprising a tank (16) for a washing solution to be sent inside the hydrolysis reactor (6) that contains said material (10).

18. A plant according to claim 17, characterized in that said reactor (6) is provided with shaking means, such as to disperse said solid material (10) inside said washing solution contained in said reactor (6).

19. A plant according to claim 18, characterized in that said washing solution is a neutral buffer solution based on phosphate salts.

20. A solid support material for beta-galactosidase enzyme in lactose hydrolysis treatments in milk, characterized in that it consists of a polymer resin in granular form.

21. A material according to claim 20, characterized in that it is a solid support material which carries out the covalent fixation of the beta-galactosidase enzyme.

22. A material according to the preceding claims, characterized in that it is a methacrylamide copolymer.

23. A material according to the preceding claims, characterized in that it is N,N-methylen-bis-acrylamide with a monomer including an oxirane group fixing the enzyme with covalent bond.

24. A material according to the preceding claims, characterized in that said support is in the form of granules (10) with a spheroidal structure, with a high surface-to-volume ratio and high enzymatic activity.

25. Use of the solid support material according to claims 17 and 18 to fix beta-galactosidase enzyme in lactose hydrolysis treatments in milk.
